# EUROPEAN PATENT APPLICATION

(11) **EP 4 682 023 A1**
(43) Date of publication of application: **21.01.2026**
(21) Application number: 24189387.4
(22) Date of filing: 18.07.2024
(51) Int. Cl.: B62D 5/065, B62D 5/06

(54) **POWER STEERING SYSTEM**

(71) Applicant: Volvo Truck Corporation, 405 08 Göteborg (SE)
(72) Inventor: ARAUJO, Tiago, 423 37 Torslanda (SE); FACHINELLO, Andre, 80.820-330 Curitiba (BR)
(74) Representative: Ström & Gulliksson AB

(57) **Abstract**

The present disclosure relates to a power steering system (100) for a vehicle (1), the power steering system (100) comprising a power steering control system (140) configured to control the power steering system, (100) a first power steering pump (110A) configured to be driven by a propulsion source (2) of the vehicle (1), a second power steering pump (110B) configured to be driven by the rotation of the wheels (5) of the vehicle (1), wherein the first power steering pump (110A) is a controllable pump operatively connected to the power steering control system (140) and said power steering control system (140) is configured to control said first power steering pump (110A). The first and second power steering pump (110A, 110B) are connected to a common power steering fluid circuit (112) such that said first and second power steering pump (110A, 110b) can operate in parallel to simultaneously provide power steering assistance.

## Description

### TECHNICAL FIELD

The disclosure relates generally to power steering systems. In particular aspects, the disclosure relates to a power steering system and a vehicle comprising a power steering system. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A power steering system has been a standard feature in vehicles for many years, in particular in industrial vehicles. Such a system assists the vehicle driver by applying a force to the wheels, for example through a hydraulic steering actuator. Therefore, a lower effort is required for the driver when turning the steering wheel and the vehicle is easier to maneuver.

A power steering system typically comprises a hydraulic circuit carrying a pressurized fluid - such as oil - from a tank to the steering actuator, by means of a pump.

In many power steering systems, the pump is driven by the vehicle combustion engine, generally gear driven or belt-driven by said engine.

Fully electric solutions for power steering has become increasingly popular. However, such electric solutions are not always suitable. For example, in cases of heavy duty vehicles such as commercial vehicle, the power required for power steering assistance is high compared to cars making a fully electric solution expensive due to commonly requiring either the vehicle to be a Battery Electric Vehicle (BEV) or to have a 48V battery dedicated for power steering.

To address the redundancy requirements, dual power steering pumps are commonly used today for safety purposes. Dual power steering pump systems are not ideal when it comes to drivability/steering wheel feeling. For example, when the pumps for providing the power steering are shifted, e.g. when the motor is shut off, and the electrical pump starts, it can be felt in the steering wheel. Furthermore, due to the pressure drop, flow drops or pulsations can occur in the hydraulic circuit.

### SUMMARY

According to a first aspect of the disclosure, a power steering system for a vehicle is provided. The power steering system comprises a power steering control system configured to control the power steering system, a first power steering pump configured to be driven by a propulsion source of the vehicle and a second power steering pump configured to be driven by the rotation of the wheels of the vehicle. The first power steering pump is a controllable pump operatively connected to the power steering control system and said power steering control system is configured to control said first power steering pump. The first and second power steering pump are connected to a common power steering fluid circuit such that said first and second power steering pump can operate in parallel to simultaneously provide power steering assistance. The first aspect of the disclosure may seek to achieve a power steering system making the transition between power sources powering the power steering system less noticeable for the vehicle operator by reducing negative impact on driving and handling perception. The first aspect of the disclosure may further seek to achieve a power steering system possible to control for optimization in terms of improved safety and energy consumption. A technical benefit may include that the controllable first pump in combination with the second pump driven by the rotation of the wheels allows for smooth and controllable transition between states where either the first, second or both of the first and second pump powers the power steering system.

Optionally in some examples, including in at least one preferred example, the first and second power steering pump may be arranged in parallel in the common power steering fluid circuit. The first and second power steering pump may be fluidly connected to a steering actuator of the power steering system. A technical benefit may include that a non-complex power steering system achieved.

Optionally in some examples, including in at least one preferred example, the power steering control system is configured to control the first power steering pump such that the total flow of power steering fluid provided by the first and second power steering pump is kept within a flow interval during operation of the vehicle to keep the total flow of power steering fluid to the steering actuator substantially constant. A technical benefit may include that the operator of the vehicle sense less negative impact on driving and handling.

Optionally in some examples, including in at least one preferred example, the first power steering pump may be configured to be connected to an output shaft of the propulsion source of the vehicle. A technical benefit may include that a less complex power steering system may be achieved.

Optionally in some examples, including in at least one preferred example, the first power steering pump may be an electrically controllable variable displacement. A technical benefit may include that the power steering system allows for a controllable power steering assistance level regardless of the present conditions.

Optionally in some examples, including in at least one preferred example, the power steering control system may be configured to control the first power steering pump based on operational data associated with the operation of the vehicle. A technical benefit may include that the power steering system may be controlled based on the present operating conditions in order to improve aspects such as energy efficiency, driver comfort and/or safety.

Optionally in some examples, including in at least one preferred example, the operational data may comprise steering data associated with the angle of the steering wheel of the vehicle, propulsion source data associated with the speed of the propulsion source and/or vehicle speed data associated with the travelling speed of the vehicle.

Optionally in some examples, including in at least one preferred example, the power steering control system may be configured to control the first power steering pump based on a total requested flow of power steering fluid, second power steering pump data associated with the operation of the second power steering pump and the travelling speed of the vehicle. A technical benefit may include that the power steering system may be controlled to provide a substantially constant level of power steering assistance by adjustment of the flow of power steering fluid generated by the second power steering pump.

Optionally in some examples, including in at least one preferred example, the power steering control system may be configured to determine a requested first power steering pump flow of the first power steering pump based on the total requested flow of power steering fluid and a flow of the second power steering pump associated with a current travelling speed of the vehicle. A technical benefit may include that the power steering assistance level provided by the first power steering pump may be controlled more accurately allowing for a more precise and accurate power steering system.

Optionally in some examples, including in at least one preferred example, the power steering control system may comprise a pulse width modulator configured to determine the requested first power steering pump flow by obtaining a current travelling speed of the vehicle and the associated flow of the second power steering pump. A technical benefit may include that the power steering assistance level provided by the first power steering pump may be controlled more accurately allowing for a more precise and accurate power steering system.

Optionally in some examples, including in at least one preferred example, the second power steering pump may be configured to be connected to a torque output source arranged downstream of a transmission system of the vehicle, the power steering pump may be configured to be driven by means of torque provided by the torque output source. A technical benefit may include that a less complex power steering system may be achieved.

Optionally in some examples, including in at least one preferred example, the torque output source may be a propeller shaft of the vehicle, a transmission output shaft connected to the transmission system or a countershaft of the vehicle.

Optionally in some examples, including in at least one preferred example, the second power steering pump may be a controllable pump operatively connected to the power steering control system and said power steering control system may be configured to control said second power steering pump. A technical benefit may include that the power steering system may be controlled to more accurately provide a desired power assistance level.

Optionally in some examples, including in at least one preferred example, the operational data may comprise steering data associated with the angle of the steering wheel of the vehicle, propulsion source data associated with the speed of the propulsion source and/or vehicle speed data associated with the travelling speed of the vehicle.

Optionally in some examples, including in at least one preferred example, the power steering control system may be configured to independently control the first power steering pump and the second power steering pump. A technical benefit may include that the power steering system may be controlled to more accurately provide a desired power steering assistance level.

Optionally in some examples, including in at least one preferred example, the power steering control system may be configured to independently control the first power steering pump and the second power steering pump. A technical benefit may include that the power steering system may be controlled to more accurately provide a desired power assistance level. Another technical benefit may include that the power steering system may be controlled to account for one of the power steering pumps malfunctioning.

Optionally in some examples, including in at least one preferred example, the second power steering pump may be a non-controllable mechanical pump. A technical benefit may include that a less complex and more cost-efficient power steering system may be achieved.

Optionally in some examples, including in at least one preferred example, the second power steering pump may be a fixed displacement pump.

Optionally in some examples, including in at least one preferred example, the power steering system may be a hydraulic power steering system and the first and second power steering pump may be hydraulic power steering pumps.

According to a second aspect of the disclosure, a vehicle is provided. The vehicle comprises a power steering system of any of the examples described herein. The second aspect of the disclosure may seek to achieve a vehicle wherein the transition between power sources powering the power steering system is less noticeable for the vehicle operator by reducing negative impact on driving and handling perception. The second aspect of the disclosure may further seek to achieve a power steering system possible to control for optimization in terms of improved safety and energy consumption. A technical benefit may include that the controllable first pump in combination with the second pump driven by the rotation of the wheels allows for smooth and controllable transition between states where either the first, second or both of the first and second pump powers the power steering system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematically depicted exemplary vehicle according to an example.
**FIG. 2** is a perspective view of aspects of a power steering system according to an example.
**FIG. 3** is a schematic view of a vehicle and aspects of a power steering system according to an example.
**FIG. 4** is a schematic drawing of a power steering system according to an example.
**FIG. 5** is a schematic drawing of a power steering system according to an example.
**FIG. 6** is a system diagram of a vehicle and a power steering system according to an example.
**FIG. 7** is a system diagram of a power steering system and a computer system according to an example.
**FIG. 8** is a system diagram of a power steering system and a computer system according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

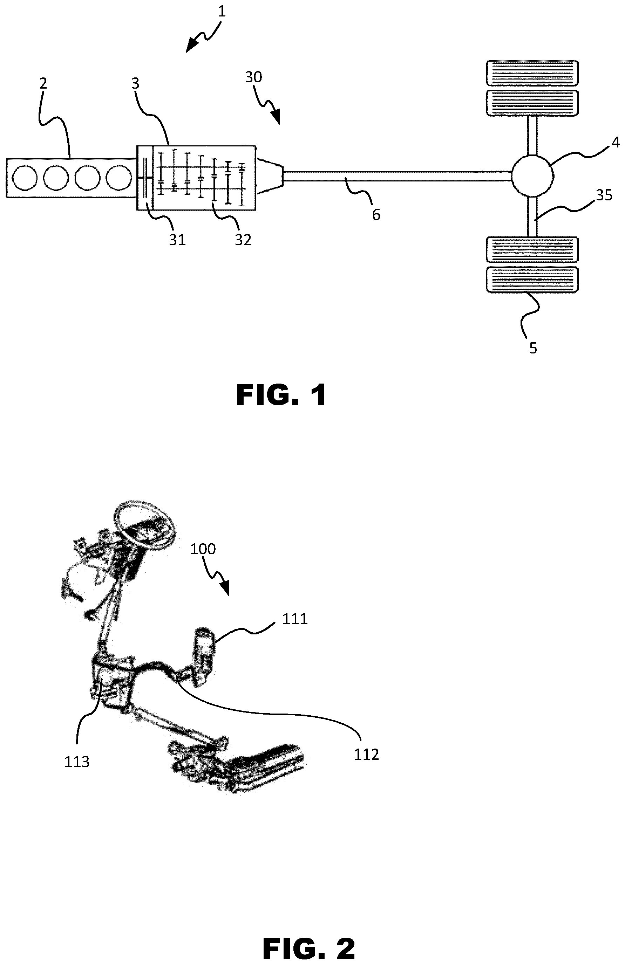

**FIG. 1** illustrates a vehicle **1**, such as a commercial vehicle or truck and a drivetrain for the vehicle **1.**

The vehicle **1** may comprise a propulsion source **2.** The propulsion source **2** may be configured to propel the vehicle **1.** The propulsion source **2** may be a traction engine which is able to drive the drive wheels **5** of the vehicle **1** through a driveline **30.** In many cases, such as in a conventional truck as represented on **FIG. 1**, the propulsion source **2** is a combustion engine and the drivetrain includes mainly a clutch **31**, a transmission system **3** comprising a gearbox **32**, a propeller shaft **6**, a differential **4** and a drive shaft **35** for each drive wheel **5.**

In such a case, it is possible to define a downstream portion of the drivetrain as being the portion which is permanently connected to the drive wheels **5**, even if the clutch **31** is opened, thereby disconnecting the gearbox from the traction engine, and/or if the gearbox is in neutral. In such a case, the downstream portion of the gearbox can be considered to start from the gearbox assembly output shaft and also comprises the propulsion shaft, the differential and the drive shafts. In the case of a purely electrical vehicle, where the propulsion source **2** is an electrical motor, a similar drivetrain can be used, possibly without the clutch. In a parallel hybrid truck, an electric motor can be added to the drivetrain of a conventional truck, for example upstream of the transmission system, although such an electrical motor could also be connected downstream of the gearbox. A series hybrid vehicle can be considered as a variant of an electrical vehicle where at least part of the electrical power needed by the traction engine is provided by an electrical generator driven by a combustion engine.

The vehicle **1** may further comprises a power steering system in order to assist the driver in steering the vehicle **1.** The power steering system serves to assist the steering system of the vehicle **1.**

An example of a steering system is depicted in **FIG. 2**. The steering system may comprise a power steering system **100.** The power steering system **100** may comprise a power steering fluid circuit **112** in which a fluid, can flow from a fluid tank **111** to a steering actuator **113** and then back to the fluid tank **111.** Hence, the power steering system **100** may comprise the steering actuator **113** and the fluid tank **111.** The power steering system **100** further comprises at least one the power steering pump (not shown).

The fluid may be moved in the closed fluid circuit **112** by means of the power steering pump. The power steering pump is arranged between the fluid tank **111** and the steering actuator **113.** The steering actuator **113** may be configured to provide steering assistance for the vehicle by means of providing torque to the steering links of the vehicle to multiply driver input torque to the wheels of the vehicle. The at least one power steering pump may provide a flow of fluid to the steering actuator **113**, thereby providing the assistance for the driver to steer the vehicle **1.**

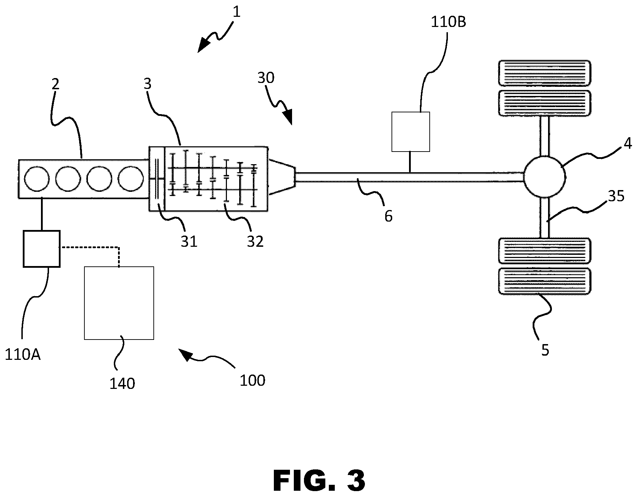

As will be described further with reference to **FIG. 3-5**, the power steering system **100** may comprise two power steering pumps. Accordingly, the power steering system **100** may comprise a first power steering pump **110A** and a second power steering pump **110B.** Each of the power steering pumps may be configured to provide power steering assistance by means of the steering actuator **113.** Alternatively, the power steering system **100** may comprise more than one steering actuator, whereby each power steering pump may be configured to provide power steering assistance by means of a corresponding steering actuator.

The power steering system **100** may be a hydraulic power steering system. Hence, the fluid utilized may be oil, the power steering fluid circuit **112** may be a closed hydraulic circuit, the steering actuator **113** may be a hydraulic steering actuator and the first and second power steering pump **110A-B** may be hydraulic power steering pumps.

Both electrically and mechanically driven power steering systems have been implemented in the past. However, electrically driven power steering systems require expensive electrical components capable of withstanding the high power peaks needed for providing steering assistance to certain vehicles and mechanically driven power steering systems may not provide adequate power at lower speeds if driven by the rotation of the vehicle wheels, or when freewheeling if driven by the vehicle propulsion source and the vehicle propulsion source is off. Mechanically driven power steering systems are also not energy efficient in cases where there is no demand for steering assistance These shortcomings have been addressed with dual pump systems, however the switching between the pumps can be felt in the steering wheel and therefore negatively affects the drivability of the vehicle.

**FIG. 3** schematically depicts a vehicle **1** and a power steering system **100.** The power steering system **100** may include the components described with reference to **FIG. 2****.**

The first power steering pump **110A** is configured to be driven by the propulsion source **2** of the vehicle **1.** In the depicted example, the first power steering pump **110A** is configured to be connected an output shaft of the propulsion source **2** of the vehicle **1.** Referencing **FIG. 3**, the first power steering pump **110A** may be driven by the rotation of the output shaft of the propulsion source **2.**

The second power steering pump **110B** is configured to be driven by the rotation of the wheels **5** of the vehicle **1.** The second power steering pump **110B** may thus be considered a ground driven power steering pump **110B.** It is noted that ground driven herein refers to the power steering pump **110B** being driven by means of the rotation of the wheels contrary to the rotation of a motor shaft.

The second power steering pump **110B** may be configured to be connected to a torque output source. The torque output source **6** may be arranged downstream of the transmission system **3** of the vehicle **1.** The power steering pump **110** may be configured to be driven by means of torque provided by the torque output source.

The torque output source may be configured to transfer an output torque from the drivetrain at a position downstream of the gearbox **32** of the transmission system **3.** The torque output source may thus be configured to transfer a ground driven rotation to the second power steering pump **110B.** The torque output source may be considered an output shaft connected to the transmission system **3.**

The torque output source may for example be the propeller shaft **6**, a transmission output shaft connected to the transmission system **3** or a countershaft of the vehicle. In the depicted example, the second power steering pump **110B** is connected to and driven by the propeller shaft **6** of the vehicle **1.**

The power steering system **100** further comprises a power steering control system **140.** The power steering control system **140** is configured to control the power steering system **100.**

The first power steering pump **110A** is a controllable pump. The first power steering pump **110A** is operatively connected to the power steering control system **100.** The power steering control system **140** is configured to control the first power steering pump **110A**

As the skilled person is aware, there are several types of controllable pumps **110A** available for the skilled person. Generally, a controllable pump as described herein refers to a pump which is mechanically driven, e.g. driven by means of being connected to a rotatable shaft, and comprises functionality for adapting the output flow.

In the depicted example, the first power steering pump **110A** is provided as a variable displacement pump. In an example, the first power steering pump **110A** may be an electrically controllable variable displacement pump. The power steering control system **100** may thus be configured to control the first power steering pump **110A** by controlling the displacement of said first power steering pump **110A.**

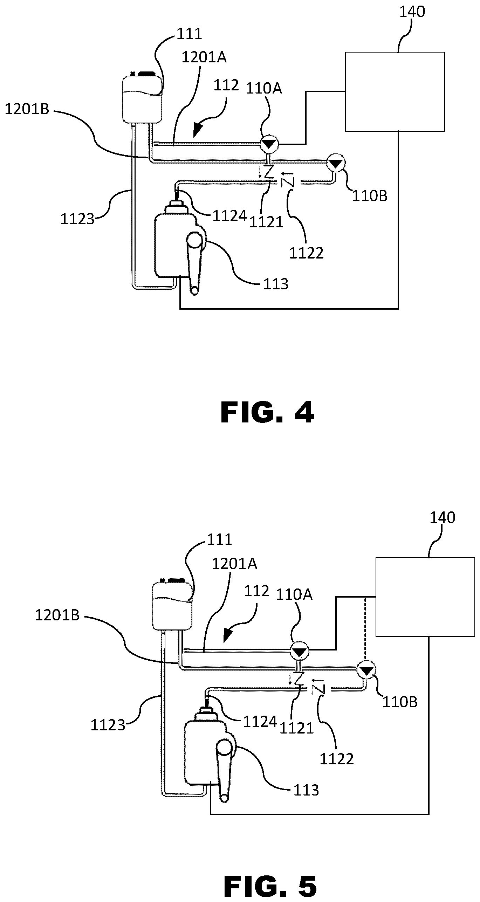

**FIG. 4-5** schematically depicts examples of the power steering system **100.** Referencing said **FIG. 4-5**, the power steering fluid circuit **112** may be a common power steering fluid circuit **112.** The first and second power steering pump **110A-B** are connected to the common power steering fluid circuit **112.** The first and second power steering pump **110A-B** are connected to, i.e. in fluid communication with, the common power steering fluid circuit **112** such that the first and second power steering pump **110A-B** can operate simultaneously to provide power steering assistance.

Thus, in the event of the vehicle moving at a low speed and second power steering pump **110B** as a result not providing a high level of power steering assistance, the first power steering pump **110A** may compensate. In the event of the vehicle freewheeling and the first power steering pump **110A** as a result not providing a high level of power steering assistance, the second power steering pump **110B** may compensate.

The first and second power steering pump **110A-B** may be arranged in parallel in the common power steering fluid circuit **112.** The first and second power steering pump **110A-B** may be fluidly connected to the steering actuator **113** of the power steering system **100.** In an example, the first and second power steering pump **110A-B** may each be connected to a shared inlet **1124** of the steering actuator **113** such that said shared inlet **1124** can receive a flow of both the first and second power steering pump **110A-B** simultaneously.

Referencing **FIG. 4-5**, the common power steering fluid circuit **112** may comprise a first branch **1201A** and a second branch **1201B.** The first branch **1201A** and the second branch **1201B** may each fluidly connect the fluid tank **111** and the inlet **1124** of the steering actuator **113.** The first power steering pump **110A** may be arranged in the first branch **1201A** and the second power steering pump **110B** may be arranged in the second branch **1201B.**

In the depicted example, the first branch and second branch **1201A-B** may be interconnected at one or more position.

In the depicted example, the first and second branch **1201A-B** may both be connected to the same outlet of the fluid tank **111.**

In the depicted example, are interconnected at a position downstream of the first and second power steering pump **110A-B** such that the outlet flow of each power steering pump is joined prior to reaching the steering actuator **113.**

Referencing **FIG. 4-5**, a check valve **1121**, **1122** may be arranged downstream of each power steering pump **110A-B.** Thus, a first check valve **1121** may be arranged downstream of the first power steering pump **110A** and a second check valve **1122** may be arranged downstream of the second power steering pump **110B.** In the depicted example, the first check valve **1121** may be arranged in the first branch **1201A** between the first power steering pump **110A** and a joined section of the first and second branch **1201A-B.** In the depicted example, the second check valve **1122** may be arranged in the second branch **1201B** between the second power steering pump **110B** and the joined section of the first and second branch **1201A-B.**

The power steering circuit **100** may further comprise return line **1123** fluidly connecting the steering actuator **113** and the fluid tank **111.** The return line **1123** fluidly connects an outlet of the steering actuator **113** and an inlet of the fluid tank **111.** The return line **1123** is adapted to re-circulate the power steering fluid back to the fluid tank **111.**

Further referencing **FIG. 4-5**, the steering actuator **113** may be operatively connected to the power steering control system **140.** The power steering control system **140** may be configured to control the steering actuator **113.** However, it may be envisioned that the steering actuator **113** is provided independently from the power steering control system **140** and not controlled by said power steering control system **140.**

**FIG. 4** depicts an example of the power steering system **100** wherein only first power steering pump **110A** is controllable. The second power steering pump **110B** may be a non-controllable pump **110B** such as a fixed displacement pump. Accordingly, the flow generated by the second power steering pump **110B** may solely be controlled based on the input speed of the shaft connected to the second power steering pump **110B.**

**FIG. 5** depicts an example of the power steering system **100** wherein both the first and second power steering pump **110A-B** are controllable. In the depicted example, the second power steering pump **110B** may be a controllable pump operatively connected to the power steering control system **140.** The power steering control system **140** may be configured to control the second power steering pump **110B.** In one example, the second power steering pump **110B** may an electrically controlled variable displacement pump. The power steering control system **140** may be configured to control the displacement of the second power steering pump **110B.**

In one example, the power steering control system **140** may be configured to control the first and second power steering pump **110A-B** independently from each other. Thereby, the power steering control system **140** may adjust the power steering assistance level based on for example one of the pumps malfunctioning etc.

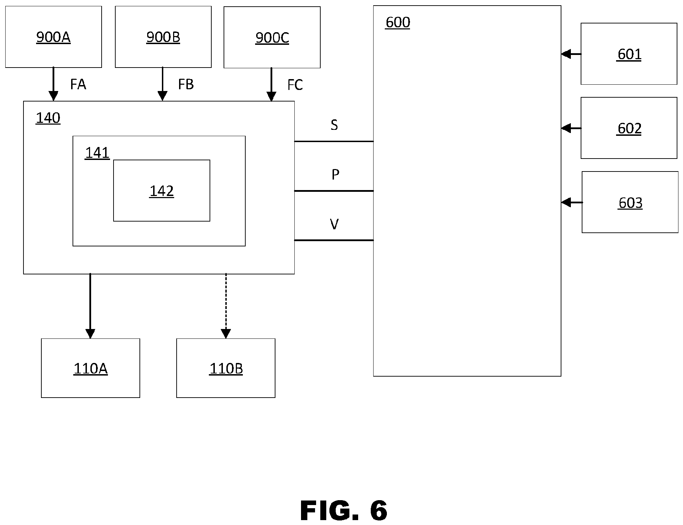

**FIG. 6** depicts a system diagram of aspects of a vehicle of one example. In the depicted example, the power steering control system **140** is configured to control the first power steering pump **110A** based on operational data associated with the operation of the vehicle **1.** The power steering control system **140** may be configured to obtain the operational data from a vehicle control module **600.**

The power steering control system **140** may comprise steering control processing circuitry **141** configured to perform the functions and method steps provided herein.

In one example, the operational data may comprise steering data associated with the angle of the steering wheel of the vehicle **1.** The power steering control system **140** may be configured to obtain the steering data **S** from the vehicle control module **600.** The vehicle control module **600** may be configured to be operatively connected to a steering wheel angle sensor **601** configured to measure the current steering wheel angle. The steering control processing circuitry **141** may be configured to process the steering data **S** to identify the current steering wheel angle.

In one example, the operational data may comprise propulsion source data associated with the speed of the propulsion source **2.** The power steering control system **140** may be configured to obtain the propulsion source data **P** from the vehicle control module **600.** The vehicle control module **600** may be configured to be operatively connected to a propulsion source speed sensor **602** configured to measure the speed of the propulsion source **2.** The steering control processing circuitry **141** may be configured to process the propulsion source data **P** to identify the current propulsion source speed.

In one example, the operational data may comprise vehicle speed data associated with the travelling speed of the vehicle **1.** The power steering control system **140** may be configured to obtain the vehicle speed data **V** from the vehicle control module **600.** The vehicle control module **600** may be configured to be operatively connected to a vehicle speed sensor **603** configured to measure the speed of the vehicle **1.** The steering control processing circuitry **141** may be configured to process the vehicle speed data **V** to identify the vehicle travelling speed.

In one example, the power steering control system **140** may be configured to obtain second power steering pump data **FB** associated with the operation of the second power steering pump **110B.** The power steering control system **140** may be configured to be operatively connected to a second pump operation sensor **900B.** The second pump operation sensor **900B** may be configured to monitor one or more parameters relating to the operation of the second power steering pump **110B.** The second pump operation sensor **900B** may be configured to monitor an outlet flow and/or pump operating speed of the second power steering pump **110B.**

In one example, the power steering control system **140** may be configured to obtain first power steering pump data **FA** associated with the operation of the first power steering pump **110A.** The power steering control system **140** may be configured to be operatively connected to a first pump operation sensor **900A.** The first pump operation sensor **900A** may be configured to monitor one or more parameters relating to the operation of the first power steering pump **110A.** The first pump operation sensor **900A** may be configured to monitor an outlet flow and/or pump operating speed of the first power steering pump **110A.**

In one example, the power steering control system **140** may be configured to obtain total flow data **FC** associated with the total flow provided by the first and second power steering pump **110A-B** to the steering actuator **113.** The power steering control system **140** may be configured to be operatively connected to a total flow sensor **900C.** The total flow sensor **900C** may be configured to monitor the total flow provided by the first and second power steering pump **110A-B** to the steering actuator **113.**

To ensure that the power steering assistance level is kept at the same level as the power steering assistance level of each of the first and second power steering pump **110A-B** shifts, a total flow of power steering fluid may be utilized for the control of the first power steering pump **110A.** The power steering control system **140** may be configured to control the first power steering pump **110A** such that the total flow of power steering fluid provided by the first and second power steering pump **110A-B** is kept within a flow interval during operation of the vehicle **1** to keep the total flow of power steering fluid to the steering actuator **113** is substantially constant. In one example, the power steering control system **140** may be configured to determine the total flow of power steering fluid provided by the first and second power steering pump **110A-B** based on the first power steering pump data **FA** and the second power steering pump data **FB.** In one example, the power steering control system **140** may be configured to determine the total flow of power steering fluid based on the total flow data **FC.**

In one example, the power steering control system **140** may be configured to control the first power steering pump **110A** based on a total requested flow of power steering fluid. In one example, the power steering control system **140** may be configured to determine the total requested flow of power steering fluid. The total requested flow of power steering fluid may be considered a total requested flow of power steering fluid to be provided to the steering actuator **113.**

The power steering control system **140** may configured to control the first power steering pump **110A** based on the total requested flow of power steering fluid, the second power steering pump data **FB** and the travelling speed of the vehicle. The travelling speed of the vehicle **1** may be determined by the power steering control system **140** based on the vehicle speed data **V.** In one example, the power steering control system **140** may be configured to determine a total requested flow of power steering fluid for a current speed of the vehicle. Based on the current flow of the second power steering pump **110B** and the total requested flow of power steering fluid, the power steering control system **140** may be configured to determine a requested flow of the first power steering pump **110A.** The power steering control system **140** may be configured to control the first power steering pump **110A** based on the requested flow of the first power steering pump **110A**, e.g. the power steering control system **140** may be configured to control the first power steering pump **110A** to provide the determined requested flow of the first power steering pump **110A.**

The power steering control system **140**, i.e. the processing circuitry **141**, may comprise a pulse width modulator **142.** The pulse width modulator **142** may be configured to determine the requested first power steering pump flow by obtaining the current travelling speed of the vehicle **1** and the associated flow of the second power steering pump **110B.** The pulse width modulator **142** may thus for each duty cycle be configured to determine a requested first power steering pump flow. In one example, the pulse width modulator **142** is configured to based on the current travelling speed of the vehicle **1** determine an associated flow of the second power steering pump **110B** and based on said associated flow of the second power steering pump **110B** and the total requested flow, determine the requested first power steering pump flow.

Further referencing **FIG. 6** and as described with reference to **FIG. 5**, the power steering control system **140** may be configured to control the second power steering pump **110B**.

In one example, the power steering control system **140** may be configured to control the second power steering pump **110B** based on operational data associated with the operation of the vehicle **1.** Similar to the first power steering pump **110A**, the operational data may comprise the steering data **S** associated with the angle of the steering wheel of the vehicle **1**, the propulsion source data **P** associated with the speed of the propulsion source **2** and/or the vehicle speed data **V** associated with the travelling speed of the vehicle **1.**

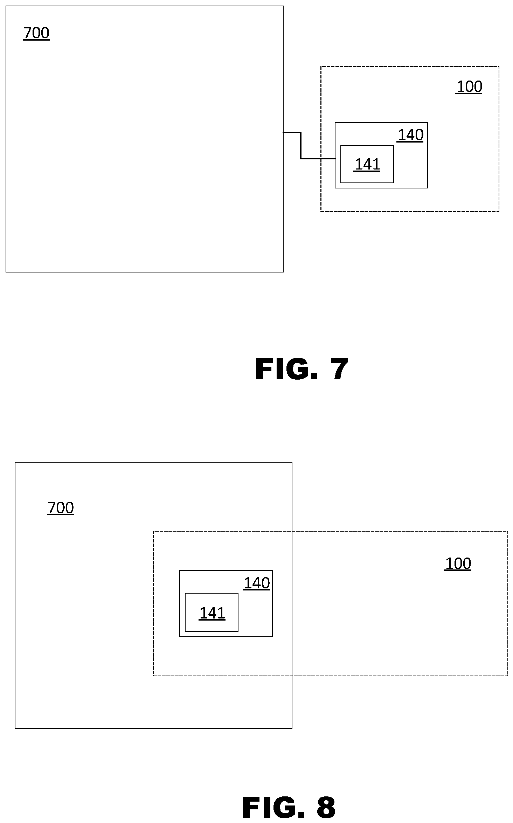

As depicted in **FIG. 7**, the power steering control system **140** may be operatively connected to a computer system **700** for performing the steps described with reference to **FIG. 6****.** The computer system **700** may be operatively connected to the power steering control system **140** via any readily available communication connection, for example via CAN.

According to another example, depicted in **FIG. 8**, the power steering control system **140** may be comprised in the computer system **700.** For example, the processor device of the computer system **700** may comprise the power steering control system.

In one example, the vehicle **1** may comprise the computer system **700.**

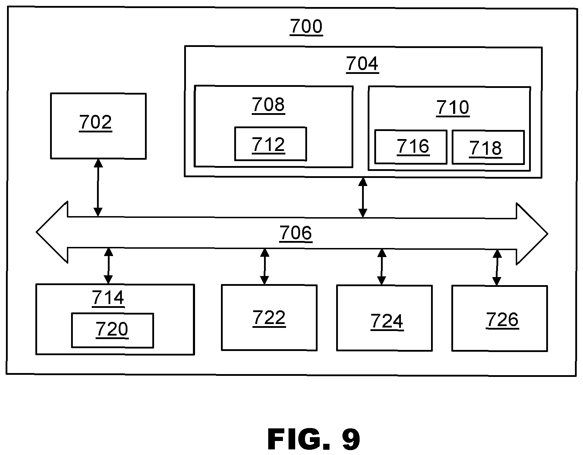

**FIG. 9** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **XX00** may include processing circuitry **702** (e.g., processing circuitry including one or more processor devices or control units), a memory **704**, and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **XX14** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710**, which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714**, which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to an aspect, a power steering system and method according to any of the below examples may be provided.

Example 1: A power steering system (100) for a vehicle (1), the power steering system (100) comprising: a power steering control system (140) configured to control the power steering system (100), a first power steering pump (110A) configured to be driven by a propulsion source (2) of the vehicle (1), and a second power steering pump (110B) configured to be driven by the rotation of the wheels (5) of the vehicle (1), wherein the first power steering pump (110A) is a controllable pump operatively connected to the power steering control system (140) and said power steering control system (140) is configured to control said first power steering pump (110A), and wherein the first and second power steering pump (110A-B) are connected to a common power steering fluid circuit (112) such that said first and second power steering pump (1 10A-B) can operate in parallel to simultaneously provide power steering assistance.

Example 2: The power steering system (100) of example 1, wherein the first and second power steering pump (110A-B) are arranged in parallel in the common power steering fluid circuit (112) and wherein said first and second power steering pump (110A-B) are fluidly connected to a steering actuator (113) of the power steering system (100).

Example 3: The power steering system (100) of example 1-2, wherein the power steering control system (140) is configured to control the first power steering pump (110A) such that the total flow of power steering fluid provided by the first and second power steering pump (1 10A-B) is kept within a flow interval during operation of the vehicle (1) to keep the total flow of power steering fluid to said steering actuator (113) is substantially constant.

Example 4: The power steering system (100) of any of examples 1-3, wherein the first power steering pump (110A) is configured to be connected to an output shaft of the propulsion source (2) of the vehicle (1).

Example 5: The power steering system (100) of any of examples 1-3, wherein the first power steering pump (110A) is an electrically controllable variable displacement pump.

Example 6: The power steering system (100) of any of examples 1-5, wherein the power steering control system (140) is configured to control the first power steering pump (110A) based on operational data associated with the operation of the vehicle (1).

Example 7: The power steering system (100) of example 6, wherein the operational data comprises steering data associated with the angle of the steering wheel of the vehicle (1), propulsion source data associated with the speed of the propulsion source (2) and/or vehicle speed data associated with the travelling speed of the vehicle (1).

Example 8: The power steering system (100) of any of examples 1-7, wherein the power steering control system (140) is configured to control the first power steering pump (110A) based on a total requested flow of power steering fluid, second power steering pump data associated with the operation of the second power steering pump (110B) and the travelling speed of the vehicle (1).

Example 9: The power steering system (100) of example 8, wherein the power steering control system (140) is configured to determine a requested first power steering pump flow of the first power steering pump (110A) based on the total requested flow of power steering fluid and a flow of the second power steering pump (110B) associated with a current travelling speed of the vehicle (1).

Example 10: The power steering system (100) of example 9, wherein the power steering control system (140) comprises a pulse width modulator (142) configured to determine the requested first power steering pump flow by obtaining a current travelling speed of the vehicle (1) and the associated flow of the second power steering pump (110B).

Example 11: The power steering system (100) of any of examples 1-10, wherein the second power steering pump (110B) is configured to be connected to a torque output source arranged downstream of a transmission system (3) of the vehicle (1), the power steering pump (110) being configured to be driven by means of torque provided by the torque output source.

Example 12: The power steering system (100) of example 11, wherein the torque output source (6) is a propeller shaft (6) of the vehicle (1), a transmission output shaft connected to the transmission system (3) or a countershaft of the vehicle (1).

Example 13: The power steering system (100) of any of example 1-12, wherein the second power steering pump (110B) is a controllable pump operatively connected to the power steering control system (140) and said power steering control system (140) is configured to control said second power steering pump (110B).

Example 14: The power steering system (100) of example 13, wherein the power steering control system (140) is configured to control the second power steering pump (110B) based on operational data associated with the operation of the vehicle (1).

Example 15: The power steering system (100) of example 14, wherein the operational data comprises steering data associated with the angle of the steering wheel of the vehicle (1), propulsion source data associated with the speed of the propulsion source (2) and/or vehicle speed data associated with the travelling speed of the vehicle (1).

Example 16: The power steering system (100) of any of examples 13-15, wherein the power steering control system (140) is configured to independently control the first power steering pump (110A) and the second power steering pump (110B).

Example 17: The power steering system (100) of any of examples 1-12, wherein the second power steering pump (110B) is a non-controllable mechanical pump.

Example 18: The power steering system (100) of example 17, wherein the second power steering pump (110B) is a fixed displacement pump.

Example 19: The power steering system (100) of any of examples 1-18, wherein the power steering system (100) is a hydraulic power steering system and the first and second power steering pump (110A-B) are hydraulic power steering pumps.

Example 20. A vehicle (1) comprising a power steering system of any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A power steering system (100) for a vehicle (1), the power steering system (100) comprising:
a power steering control system (140) configured to control the power steering system (100),
a first power steering pump (110A) configured to be driven by a propulsion source (2) of the vehicle (1), and
a second power steering pump (110B) configured to be driven by the rotation of the wheels (5) of the vehicle (1),
wherein the first power steering pump (110A) is a controllable pump operatively connected to the power steering control system (140) and said power steering control system (140) is configured to control said first power steering pump (110A), and
wherein the first and second power steering pump (110A-B) are connected to a common power steering fluid circuit (112) such that said first and second power steering pump (110A-B) can operate in parallel to simultaneously provide power steering assistance.

2. The power steering system (100) of claim 1, wherein the first and second power steering pump (110A-B) are arranged in parallel in the common power steering fluid circuit (112) and wherein said first and second power steering pump (110A-B) are fluidly connected to a steering actuator (113) of the power steering system (100).

3. The power steering system (100) of claim 1-2, wherein the power steering control system (140) is configured to control the first power steering pump (110A) such that the total flow of power steering fluid provided by the first and second power steering pump (110A-B) is kept within a flow interval during operation of the vehicle (1) to keep the total flow of power steering fluid to said steering actuator (113) is substantially constant.

4. The power steering system (100) of any of claims 1-3, wherein the first power steering pump (110A) is configured to be connected to an output shaft of the propulsion source (2) of the vehicle (1).

5. The power steering system (100) of any of claims 1-3, wherein the first power steering pump (110A) is an electrically controllable variable displacement pump.

6. The power steering system (100) of any of claims 1-5, wherein the power steering control system (140) is configured to control the first power steering pump (110A) based on operational data associated with the operation of the vehicle (1).

7. The power steering system (100) of claim 6, wherein the operational data comprises steering data associated with the angle of the steering wheel of the vehicle (1), propulsion source data associated with the speed of the propulsion source (2) and/or vehicle speed data associated with the travelling speed of the vehicle (1).

8. The power steering system (100) of any of claims 1-7, wherein the power steering control system (140) is configured to control the first power steering pump (110A) based on a total requested flow of power steering fluid, second power steering pump data associated with the operation of the second power steering pump (110B) and the travelling speed of the vehicle (1).

9. The power steering system (100) of claim 8, wherein the power steering control system (140) is configured to determine a requested first power steering pump flow of the first power steering pump (110A) based on the total requested flow of power steering fluid and a flow of the second power steering pump (110B) associated with a current travelling speed of the vehicle (1).

10. The power steering system (100) of any of claims 1-9, wherein the second power steering pump (110B) is configured to be connected to a torque output source arranged downstream of a transmission system (3) of the vehicle (1), the power steering pump (110) being configured to be driven by means of torque provided by the torque output source.

11. The power steering system (100) of any of claim 1-10, wherein the second power steering pump (110B) is a controllable pump operatively connected to the power steering control system (140) and said power steering control system (140) is configured to control said second power steering pump (110B).

12. The power steering system (100) of claim 11, wherein the power steering control system (140) is configured to control the second power steering pump (110B) based on operational data associated with the operation of the vehicle (1).

13. The power steering system (100) of any of claims 1-10, wherein the second power steering pump (110B) is a non-controllable mechanical pump.

14. The power steering system (100) of any of claims 1-13, wherein the power steering system (100) is a hydraulic power steering system and the first and second power steering pump (10A-B) are hydraulic power steering pumps.

15. A vehicle (1) comprising a power steering system of any of claims 1-14.

## Amended claims

### Amended claims in accordance with Rule 137(2) EPC.

1. A power steering system (100) for a vehicle (1), the power steering system (100) comprising:
a power steering control system (140) configured to control the power steering system (100),
a first power steering pump (110A) configured to be driven by a propulsion source (2) of the vehicle (1), and
a second power steering pump (110B) configured to be driven by the rotation of the wheels (5) of the vehicle (1),
wherein the first power steering pump (110A) is a controllable pump operatively connected to the power steering control system (140) and said power steering control system (140) is configured to control said first power steering pump (110A),
wherein the first and second power steering pump (110A-B) are connected to a common power steering fluid circuit (112) such that said first and second power steering pump (110A-B) can operate in parallel to simultaneously provide power steering assistance, and
wherein the first power steering pump (110A) is a variable displacement pump.

2. The power steering system (100) of claim 1, wherein the first and second power steering pump (110A-B) are arranged in parallel in the common power steering fluid circuit (112) and wherein said first and second power steering pump (110A-B) are fluidly connected to a steering actuator (113) of the power steering system (100).

3. The power steering system (100) of claim 1-2, wherein the power steering control system (140) is configured to control the first power steering pump (110A) such that the total flow of power steering fluid provided by the first and second power steering pump (110A-B) is kept within a flow interval during operation of the vehicle (1) to keep the total flow of power steering fluid to said steering actuator (113) is substantially constant.

4. The power steering system (100) of any of claims 1-3, wherein the first power steering pump (110A) is configured to be connected to an output shaft of the propulsion source (2) of the vehicle (1).

5. The power steering system (100) of any of claims 1-3, wherein the first power steering pump (110A) is an electrically controllable variable displacement pump.

6. The power steering system (100) of any of claims 1-5, wherein the power steering control system (140) is configured to control the first power steering pump (110A) based on operational data associated with the operation of the vehicle (1).

7. The power steering system (100) of claim 6, wherein the operational data comprises steering data associated with the angle of the steering wheel of the vehicle (1), propulsion source data associated with the speed of the propulsion source (2) and/or vehicle speed data associated with the travelling speed of the vehicle (1).

8. The power steering system (100) of any of claims 1-7, wherein the power steering control system (140) is configured to control the first power steering pump (110A) based on a total requested flow of power steering fluid, second power steering pump data associated with the operation of the second power steering pump (110B) and the travelling speed of the vehicle (1).

9. The power steering system (100) of claim 8, wherein the power steering control system (140) is configured to determine a requested first power steering pump flow of the first power steering pump (110A) based on the total requested flow of power steering fluid and a flow of the second power steering pump (110B) associated with a current travelling speed of the vehicle (1).

10. The power steering system (100) of any of claims 1-9, wherein the second power steering pump (110B) is configured to be connected to a torque output source arranged downstream of a transmission system (3) of the vehicle (1), the power steering pump (110) being configured to be driven by means of torque provided by the torque output source.

11. The power steering system (100) of any of claim 1-10, wherein the second power steering pump (110B) is a controllable pump operatively connected to the power steering control system (140) and said power steering control system (140) is configured to control said second power steering pump (110B).

12. The power steering system (100) of claim 11, wherein the power steering control system (140) is configured to control the second power steering pump (110B) based on operational data associated with the operation of the vehicle (1).

13. The power steering system (100) of any of claims 1-10, wherein the second power steering pump (110B) is a non-controllable mechanical pump.

14. The power steering system (100) of any of claims 1-13, wherein the power steering system (100) is a hydraulic power steering system and the first and second power steering pump (10A-B) are hydraulic power steering pumps.

15. A vehicle (1) comprising a power steering system of any of claims 1-14.
